# FASCICULE DE BREVET EUROPEEN

(11) **EP 1 669 244 B1**
(45) Date de publication et mention de la délivrance du brevet: **29.07.2009**
(21) Numéro de dépôt: 05292526.0
(22) Date de dépôt: 29.11.2005
(51) Int. Cl.: B60R 7/02, B60R 5/04

(54) **Ensemble de rangement de véhicule automobile et véhicule automobile associé**
Staueinheit für ein Kraftfahrzeug und zugehöriges Fahrzeug
Vehicle cargo storage set and vehicle

(30) Priorité: 10.12.2004 FR 0413195
(43) Date de publication de la demande: 14.06.2006
(73) Titulaire: PEUGEOT CITROËN AUTOMOBILES S.A., 78140 Vélizy Villacoublay (FR)
(72) Inventeur: Le Dall, Christophe, 92150 SURESNES (FR); Morando, Patrick, 06100 Nice (FR); Reichheld, Frederick, 06190 Roquebrune Cap Martin (FR)
(74) Mandataire: Fernandez, Francis Lionel

(56) Documents cités:
- US-A- 5 207 260

## Description

La présente invention concerne un ensemble de rangement de véhicule automobile, du type décrit dans le préambule de la revendication 1.

On connaît de WO-A-02/02 371 un ensemble de rangement du type précité, comprenant des sangles de fixation d'une valise, fixées de manière libérable contre le fond d'un coffre, entre des coins diagonalement opposés de ce fond.

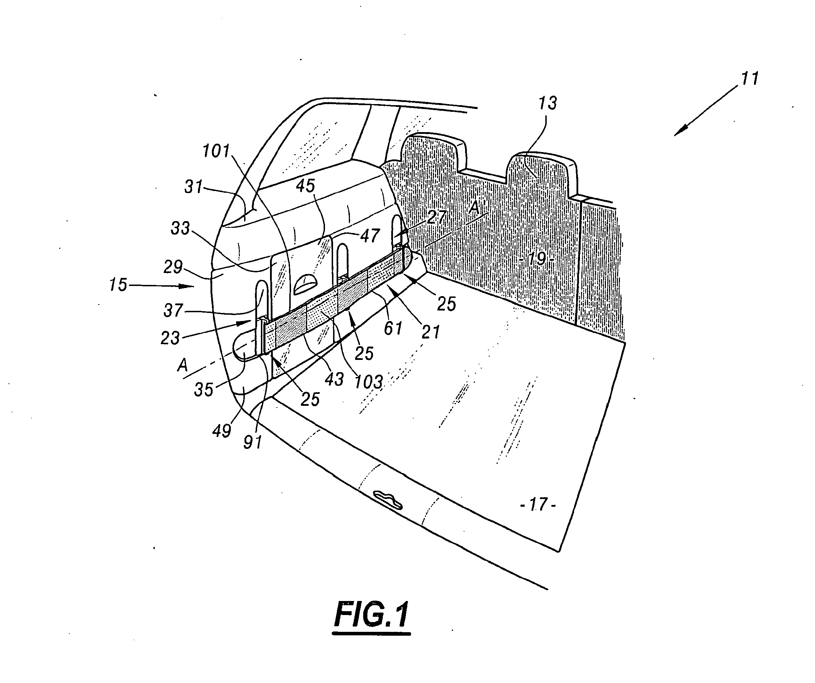

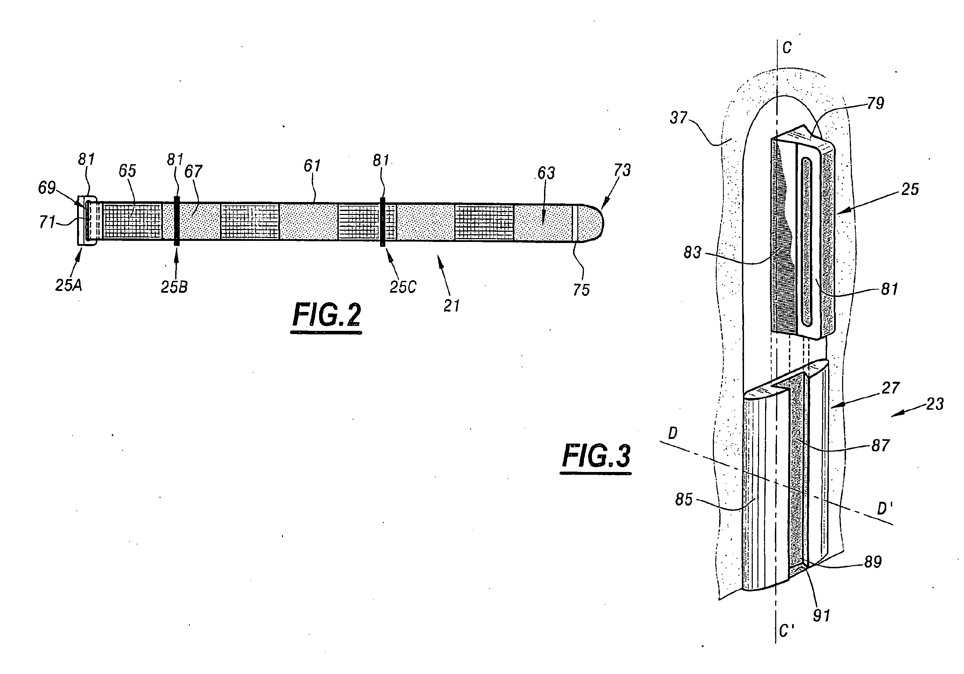

Un tel ensemble ne donne pas entière satisfaction. En effet, les sangles sont utilisables uniquement pour plaquer des objets de faible épaisseur sur le fond du coffre. Elles ne peuvent donc pas être utilisées pour fixer des objets contre une paroi verticale du coffre ou pour caler des objets présentant des épaisseurs plus grandes ou plus petites. Les possibilités d'aménagement intérieur de cet ensemble sont donc limitées.
On connaît également de US 5 207 260, qui comprend an préambule de la revendication 1, un système de rangement comportant des barres amovibles aptes à se positionner dans un coffre, entre le plancher et le pavillon: Ces barres sont munies de passants pour la mise en place de sangles d'arrimage pour arrimer des objets chargés dans le coffre. Le document FR 2 467 115 A décrit (voir page 3, ligne 29 à page 9, ligne 22, figures) un ensemble de rangement de véhicule automobile, du type comprenant:
- un agencement de cloisonnement 1 délimitant un volume intérieur de rangement d'objets 2, 3, 4, ledit agencement de cloisonnement 1 comprenant des flancs latéraux et un plancher;
- une sangle 7 de maintien d'au moins un objet 2, 3, 4 dans le volume intérieur, ladite sangle 7 présentant une longueur active variable et comprenant des moyens 6 de réglage de sa longueur active,
- un moyen de fixation libérable de la sangle 36, 8 sur l'agencement de cloisonnement 1, ce moyen comportant une partie fixe 8 solidaire 37 des flancs latéraux (voir figures 1 et 2). de l'agencement 1 et une partie de retenue 36 de la sangle 7.

Un but de l'invention est d'obtenir un ensemble de rangement comprenant au moins une sangle de fixation d'objets, l'ensemble présentant des possibilités accrues d'aménagement intérieur.

A cet effet, l'invention a pour objet un ensemble selon la revendication 1.

L'ensemble de rangement selon l'invention peut comprendre l'une ou plusieurs des caractéristiques qui font l'objet des revendications 2 à 9, prise(s) isolément ou suivant toutes combinaisons techniquement possibles.

L'invention a en outre pour objet un véhicule automobile selon la revendication 10.

Des exemples de réalisation de l'invention vont maintenant être décrits en regard des dessins annexés sur lesquels :
- la figure 1 est une vue schématique, partielle et en perspective d'un ensemble arrière de rangement selon l'invention, dans une première configuration d'aménagement intérieur ;
- la figure 2 est une vue en élévation de la sangle de fixation d'objets de l'ensemble de rangement de la figure 1 ;
- la figure 3 est une vue partielle et en perspective de moyens de fixation de la sangle dans l'ensemble de rangement selon l'invention ;
- la figure 4 est vue d'un détail de la figure 1, dans une deuxième configuration d'aménagement intérieur du véhicule ;
- la figure 5 est une vue analogue à la figure 1, dans une troisième configuration d'aménagement intérieur du véhicule ;
- la figure 6 est une vue analogue à la figure 1, dans une quatrième configuration d'aménagement intérieur du véhicule ;
- la figure 7 est une vue analogue à la figure 3 des moyens de fixation de la sangle, correspondant à une représentation partielle d'un deuxième ensemble de rangement selon l'invention ; et
- la figure 8 est une vue en perspective éclatée d'un détail de la figure 7.

Dans tout ce qui suit, les orientations utilisées sont les orientations habituelles d'un véhicule automobile. Ainsi, les termes « avant », « arrière », « droit », « gauche », « haut », « bas », « supérieur » et « inférieur » s'entendent par rapport à la position d'un conducteur du véhicule automobile et à son sens de marche.

On a représenté sur la figure 1, un ensemble de rangement arrière 11 d'un véhicule automobile. Cet ensemble 11 comprend des sièges arrière 13, des flancs latéraux 15 de la carrosserie, et un plancher 17. Ces éléments 13 à 17 forment, avec le hayon (non représenté) du véhicule, un agencement de cloisonnement délimitant le coffre arrière 19 du véhicule.

Pour simplifier le dessin, seul le flanc gauche 15 a été représenté sur la figure 1.

L'ensemble 11 comprend en outre une sangle 21 de maintien d'objets dans le coffre 19, présentant une longueur active variable, et des moyens 23 de fixation libérable de la sangle 21 sur les flancs 15. Les moyens 23 comportent une pluralité d'organes 25 de retenue de la sangle 21, montés sur cette sangle 21, et des glissières 27 fixes de réception de ces organes 25, solidaires des flancs 15 du véhicule. Ces moyens de fixation 23 sont par exemple du type « queue d'aronde ».

Les flancs 15 du véhicule sont formés par des parois 29 sensiblement verticales qui présentent, dans leur partie supérieure 31, un épaulement dirigé vers l'extérieur.

Dans l'exemple illustré par la figure 1, le flanc gauche 15 comprend en outre un panneau vertical 33 déployable transversalement dans le coffre 19, une cavité 35 de réception de la sangle 21 s'étendant horizontalement dans la paroi 19 le long d'un axe longitudinal A-A', et une pluralité de logements 37 de fixation des moyens de réception 27 s'étendant verticalement dans la paroi 29.

La cavité de réception 35 est de longueur sensiblement égale à la moitié de la longueur totale de la sangle 21. La cavité 35 présente une hauteur sensiblement égale à la hauteur de la sangle 21 et une épaisseur sensiblement égale à deux fois l'épaisseur de la sangle 21. Ainsi, la sangle 21 affleure sensiblement la surface directrice de la paroi 29 délimitant la cavité 35 lorsque la sangle 21 est disposée repliée en deux sur elle-même dans la cavité 35, comme représenté sur la figure 1.

Une partie intermédiaire 43 de la cavité 35 est ménagée dans la surface intérieure 45 du panneau déployable 33.

Le panneau 33 est reçu dans un logement 47 de forme complémentaire ménagé dans la paroi 29 de sorte que sa surface intérieure 45 affleure la surface intérieure 49 de la paroi 29 lorsque le panneau 33 est reçu dans le logement 47.

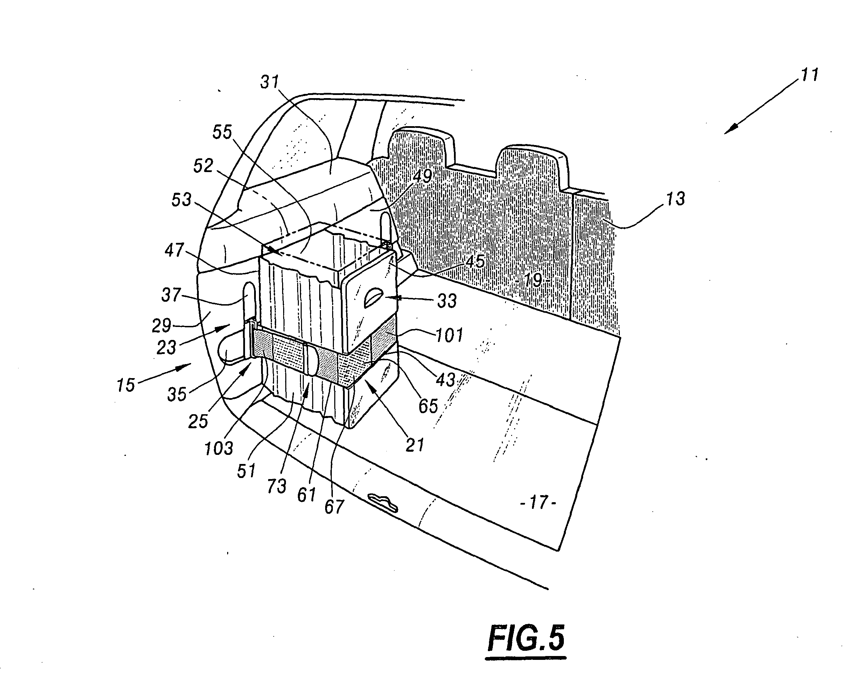

Comme illustré par la figure 5, le panneau 33 est relié à la paroi 29 par deux volets verticaux 51 flexibles, repliables en accordéon, s'étendant respectivement entre les bords latéraux verticaux respectifs du panneau 33 et les bords en regard du logement 47 recevant le panneau 33.

Le panneau 33 et les volets 51 sont ainsi déployables entre une position escamotée dans la paroi 33, représentée à la figure 1, et une position déployée, représentée à la figure 5, dans laquelle ils forment une boîte de rangement 53 délimitée verticalement par le panneau 33, les volets 51 et le fond 55 du logement 47.

La profondeur des logements de fixation 37, prise transversalement, est supérieure à la profondeur de la cavité de réception 35. La hauteur des logements 37 est supérieure à au moins deux fois la hauteur des organes de retenue 25.

La partie inférieure des logements 37 débouche intérieurement dans la cavité 35, et leur partie supérieure débouche intérieurement dans le coffre 19.

Comme illustré par la figure 2, la sangle 21 est formée par une bande 61 non élastique présentant deux faces 63 opposées.

La bande 61 présente sur chaque face 63, une alternance de surfaces d'accrochage 65 et de surfaces de réception 67 des surfaces d'accrochage 65. Dans l'exemple illustré, la longueur des surfaces d'accrochage 65, prise le long de la bande 61, est sensiblement égale à la longueur des surfaces de réception 67.

Les surfaces d'accrochage 65 sont par exemple constituées par une bande Velcro® comprenant une pluralité de pointes saillantes par rapport à la bande 61.

Les surfaces de réception 67 sont par exemple constituées par une pluralité de boucles souples qui font saillie par rapport à la bande 61.

Lorsqu'une surface d'accrochage 65 est disposée au contact d'une surface de réception 67, ces surfaces 65, 67 sont fixées entre elles de manière libérable.

La sangle 21 présente également à une extrémité 69 de fixation, à gauche sur la figure 2, un repli cousu transversalement par rapport à la bande 61. Le repli forme un passant 71.

La sangle 21 présente à son extrémité libre 73, à droite sur la figure 2, un bourrelet 75 transversal d'épaisseur supérieure à l'épaisseur de la bande 61.

Comme illustré par la figure 3, chaque organe de retenue 25 comprend un corps 79 s'étendant le long d'un axe C-C' vertical.

Le corps 79 comprend une partie intérieure 81 qui forme un passant comportant une lumière de hauteur sensiblement égale à la hauteur de la bande 61 et d'épaisseur supérieure à l'épaisseur de la bande 61, mais inférieure à l'épaisseur du bourrelet 75.

Le corps 79 comprend en outre une partie extérieure 83 sensiblement de même longueur que la partie intérieure 81. La partie extérieure 83 présente une section transversale en queue d'aronde.

La partie extérieure 83 forme une fiche destinée à s'engager dans la glissière 27.

Comme illustré par la figure 3, la glissière 27 comprend un support 85 délimitant intérieurement une fente 87 verticale d'axe C-C', laquelle présente une section transversale conjuguée de la section transversale de la fiche 83.

Chaque support 85 est monté fixe dans un logement vertical 37 respectif, de sorte que l'extrémité inférieure 89 de la fente 87 débouche sur le bord inférieur 91 du logement 37. Le bord 91 forme ainsi une butée inférieure de blocage de la fiche 83, lorsque celle-ci coulisse dans la glissière 27 vers le bas.

Par ailleurs, lorsque la fiche 83 est engagée à coulissement dans la fente 87, la glissière 27 retient l'organe 25 suivant un axe transversal D-D', par coopération entre les parois du support 85 délimitant la fente 87, et la fiche 83.

Dans l'exemple illustré par la figure 2, trois organes de retenue 25 sont montés sur la sangle 21. Un organe de retenue 25A est monté à l'extrémité de fixation 69 de la sangle 21, le passant 71 de la bande 61 étant engagé dans le passant 81 de l'organe de retenue 25A. L'organe de retenue 25A est donc fixe par rapport à la sangle 21.

Les deux autres organes de retenue 25B et 25C sont montés à coulissement le long de la bande 61 entre le passant 71 de la bande 61 et le bourrelet 75, la bande 61 étant engagée à coulissement dans leurs passants 81 respectifs.

Le fonctionnement de l'ensemble 11 selon l'invention va maintenant être décrit.

Dans une première configuration d'aménagement intérieur du coffre 19, représentée à la figure 1, la sangle 21 est repliée en deux, de sorte que sa longueur active est sensiblement égale à la moitié de la longueur de la bande 61.

Par ailleurs, la sangle 21 est maintenue dans la cavité de réception 35 par les trois organes de retenue 25, dont les fiches 83 respectives sont reçues dans les fentes 87 en regard des glissières 27 respectives. Chaque fiche 83 a été insérée dans une fente 87 respective en la disposant dans la partie supérieure du logement 37, puis en la déplaçant en translation verticale vers le bas dans la fente 87, jusqu'à ce que la fiche 83 bute contre le bord inférieur 91 du logement 37.

Dans la configuration représentée sur la figure 1, la sangle 21 présente une région extérieure 101 au contact du fond de la cavité 35, et une région intérieure 103 fixée sur la région extérieure 101 par coopération entre des surfaces d'accrochage 65 et des surfaces de réception 67 respectives sur les faces en regard de ces régions 101, 103.

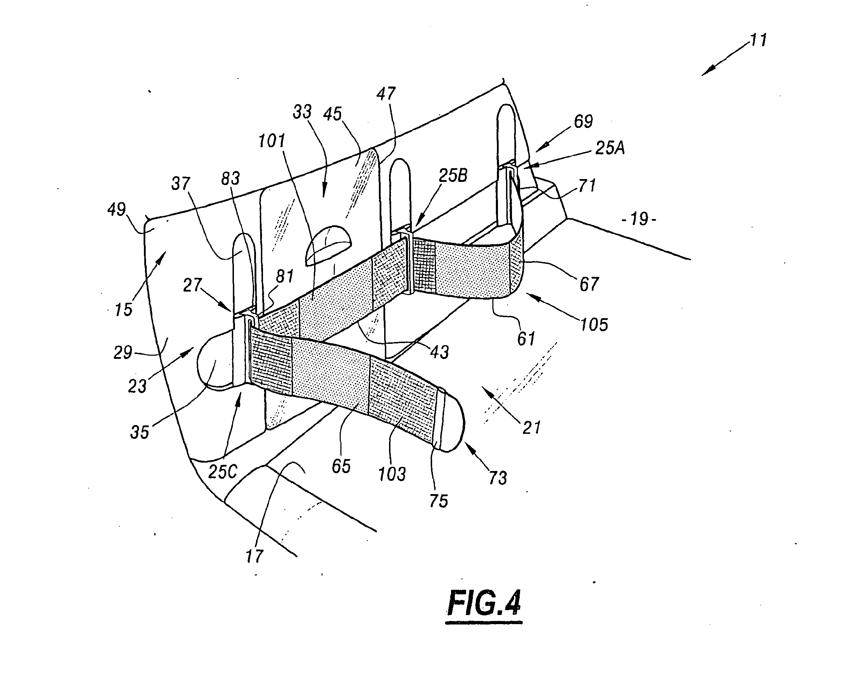

Lorsqu'on souhaite fixer un objet contre le flanc gauche 15, la région intérieure 103 de la sangle 21 est détachée de la région extérieure 101, et l'extrémité libre 73 de la sangle 21 est déplacée vers l'arrière. Comme illustré par la figure 4, une partie 105 de la région extérieure 101 de la sangle, située par exemple entre l'organe de retenue avant 25A et l'organe de retenue intermédiaire 25B, est déplacée à l'écart de la paroi 29, et forme un lien 105 de longueur réglable, qui fait saillie dans le coffre 19.

La longueur du lien 105 est réglée en fonction de la section horizontale de l'objet à enserrer dans la sangle 21, par déplacement de l'extrémité libre 73 de la sangle 21 vers l'avant ou vers l'arrière.

Puis, la région intérieure 103 de la sangle 21 est rabattue contre la région extérieure 101 de la sangle 21, pour qu'au moins une surface d'accrochage 65 de la région intérieure 103 entre en contact avec une surface de réception 67 de la région extérieure 101, la surface 67 étant par exemple située en regard du panneau 33.

Dans une troisième configuration d'aménagement intérieur représentée sur la figure 5, la région intérieure 103 de la sangle 21 est libérée de la région extérieure 101. Le panneau 33 est alors déployé vers l'intérieur du coffre 19 en déplaçant la région extérieure 101 de la sangle 21, située entre l'organe de retenue intermédiaire 25B et l'organe de retenue arrière 25C, à l'écart de la paroi 29. Puis, la région extérieure 103 est appliquée sur la région intérieure 101. La région intérieure 101 enserre les volets 51 et le panneau 33, et maintient en position la boîte 53 formée par les volets 51 et le panneau 33, avec les objets 52 rangés dans cette boîte.

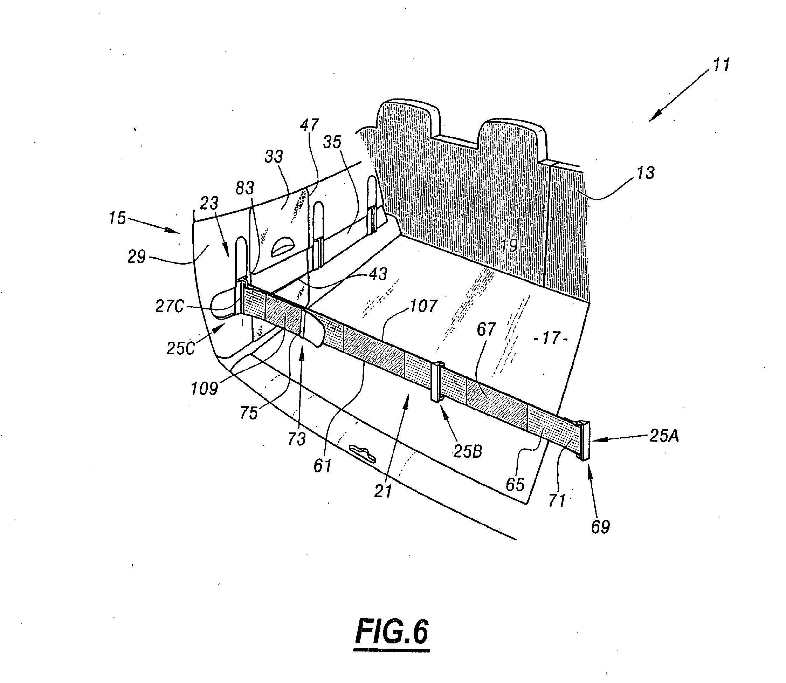

Dans la quatrième configuration d'aménagement intérieur représentée sur la figure 6, l'organe de retenue 25A situé à l'extrémité de fixation 69 de la bande 61 est inséré dans une fente d'une glissière (non représentée) fixée dans le flanc droit du véhicule en regard de la glissière arrière 27C du flanc gauche 15.

Dans ce mode de réalisation, le nombre de glissières fixes 27 est supérieur au nombre d'organes de retenue 25.

Par ailleurs, une région avant 107 de la bande 61 traverse le coffre 19 transversalement, et un organe de retenue 25C est placé au voisinage de l'extrémité libre 73 de la bande 61. La fiche 83 de cet organe 25C est reçue dans la glissière 27C du flanc gauche 15.

Par ailleurs, une surface d'accrochage 65 de la région avant 107 située au voisinage de l'extrémité libre 71 est appuyée contre une surface de réception 67 au voisinage d'une région arrière 109 de la bande 61.

La région arrière 109 et la région avant 107 forment ainsi une boucle de fixation engagée dans le passant 81 de l'organe de retenue 25C.

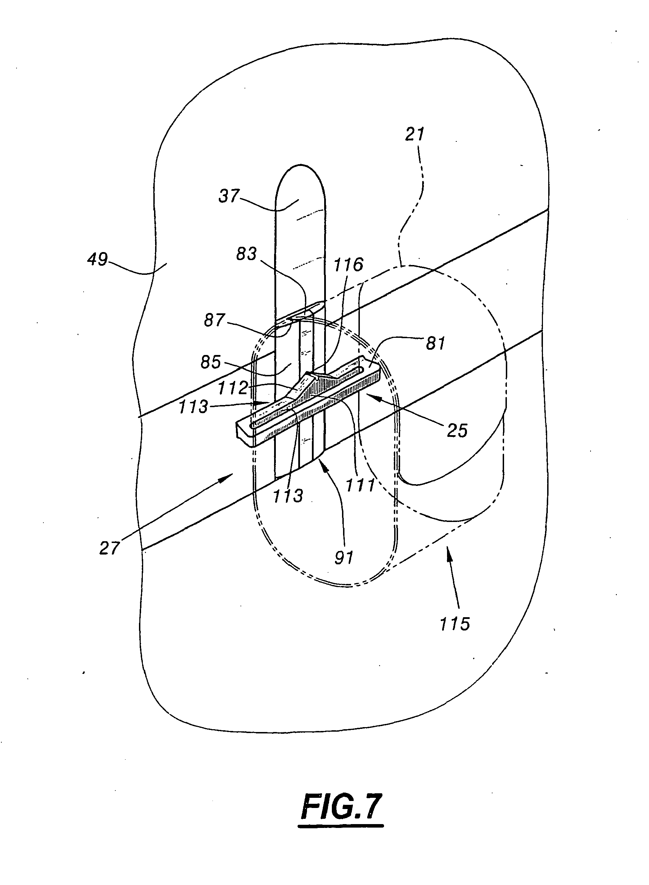

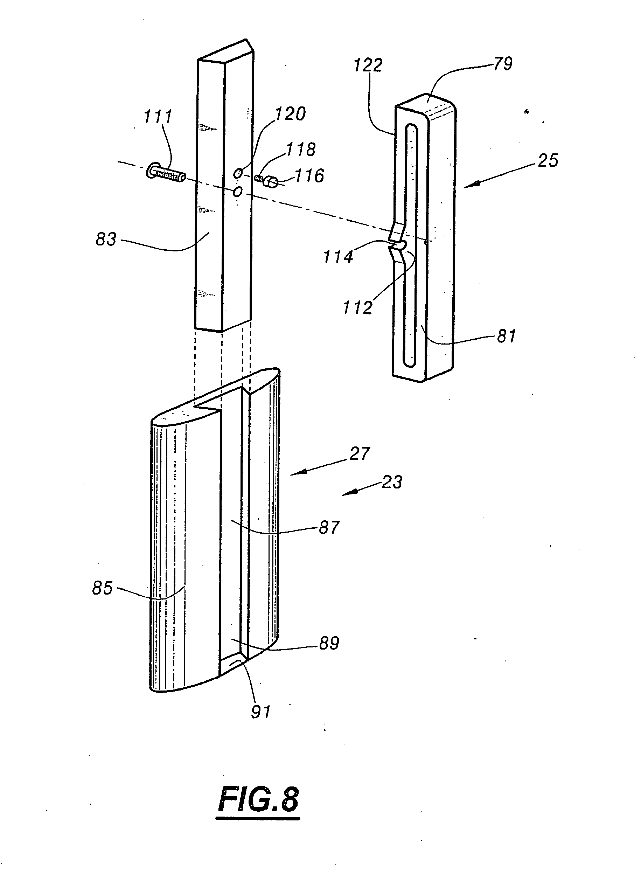

Dans une variante, représentée sur les figures 7 et 8, le passant 81 de l'organe de retenue 25 est monté mobile en rotation par rapport à la fiche 83 autour d'un pivot 111 transversal monté dans la fiche 83, entre une position sensiblement verticale en regard de la fiche 83 et une position sensiblement horizontale représentée à la figure 7, perpendiculaire à la fiche 83. Le pivot 111 est sensiblement perpendiculaire à la surface intérieure 49 de la paroi 29.

Lorsque la fiche 83 est engagée dans la fente 87, le passant 81 est donc mobile en rotation par rapport à la paroi 29 autour d'un axe sensiblement orthogonal à cette paroi 29.

Comme illustré par la Figure 8, le passant 81 comprend, dans sa partie médiane, un bossage latéral 112 délimitant une échancrure 114 de blocage.

L'organe de retenue 25 comprend en outre des moyens de blocage 113 du passant 81 dans les deux positions précitées, par exemple par encliquetage.

A titre d'exemple, les moyens de blocage 113 comprennent un ressort 118 fixé dans le fond d'une cavité 120 ménagée dans la fiche 83, et une bille 116 montée à l'extrémité libre du ressort 118. La bille 116 est mobile entre une position escamotée dans la cavité 120 et une position en saillie hors de la cavité 120.

Lorsque le passant 81 est dans la position horizontale, la bille 116 est reçue dans l'échancrure 114 et bloque en position le passant 81.

D'autres modes de réalisation des moyens de blocage 113 peuvent être envisagés.

Par ailleurs, dans la position verticale du passant 81, la bille 116 est reçue dans un logement ménagé dans la face extérieure 122 du passant 81 située en regard de la fiche 83.

Lorsque le passant 81 est maintenu dans sa position sensiblement horizontale, la sangle 21 est repliée en forme de boucle verticale 115. Cette configuration permet de fixer des objets à l'écart du plancher 17 du coffre 19, comme par exemple des skis.

Dans une autre variante (non représentée), l'organe de retenue 25 comprend une glissière 27, et la fiche 83 est montée solidaire de la paroi 29 du flanc 15 dans un logement vertical 47.

Dans une autre variante, la sangle 21 est déformable élastiquement.

Grâce à l'invention qui vient d'être décrite, il est possible de disposer d'un ensemble de rangement de véhicule automobile muni d'une sangle 21 de maintien d'objets dont la longueur active peut être réglée, ce qui permet de s'adapter à la forme des objets à maintenir dans le coffre 19. Une telle sangle 21 augmente les possibilités d'aménagement intérieur du véhicule.

Un système de fixation de type « queue d'aronde », comprenant une fiche 83 et une glissière 27 solidaires respectivement de la sangle 21 et de la paroi 29 sur laquelle la sangle 21 doit être fixée (ou inversement), permet d'améliorer la fixation mécanique entre la sangle 21 et la paroi 83, tout en facilitant la libération de la sangle 21 par rapport à la paroi 29.

La disposition sur une surface extérieure 63 de la sangle 21 d'une pluralité de surfaces d'accrochage 65 en alternance avec une pluralité de surfaces de réception 67 de ces surfaces d'accrochage 65 permet de régler facilement la longueur active de la sangle 21.

La pluralité d'organes 25 et de glissières 27 permet, avec une sangle unique, d'obtenir un système de rangement fortement modulable.

## Revendications

1. Ensemble (11) de rangement de véhicule automobile, **consistant en :**
- un agencement de cloisonnement (29) délimitant un volume intérieur (19) de rangement d'objets, ledit agencement de cloisonnement comprenant des flancs latéraux (15) et un plancher (17) ;
- une sangle (21) de maintien d'au moins un objet dans le volume intérieur (19), ladite sangle (21) présentant une longueur active variable et comprenant des moyens (65, 67) de réglage de sa longueur active ;
- **une pluralité de** moyens de fixation libérable de la sangle (21) sur l'agencement de cloisonnement (29), **caractérisé en ce que** ces moyens comportent au moins une partie fixe (27) solidaire des flancs latéraux (15) de l'agencement (29) et au moins une partie de retenue de la sangle (25).

2. Ensemble de rangement (11) selon la revendication 1, **caractérisé en ce que** les moyens de réglage (65, 67) comprennent au moins une surface extérieure (65) d'accrochage s'étendant sur la sangle (21), et au moins une surface extérieure (67) de réception de la surface d'accrochage (65) s'étendant sur la sangle (21), la surface d'accrochage (65) étant fixée de manière libérable sur la surface de réception (67) lorsque lesdites surfaces (65, 67) sont en contact.

3. Ensemble de rangement (11) selon la revendication 2, **caractérisé en ce que** les moyens de réglage (65, 67) comprennent au moins deux surfaces de réception (67) situées à l'écart l'une de l'autre.

4. Ensemble de rangement (11) selon la revendication 3, **caractérisé en ce que** les moyens de réglage (65, 67) comprennent au moins deux surfaces d'accrochage (65) distinctes, la sangle (21) présentant longitudinalement une alternance de surfaces d'accrochage (65) et de surfaces de réception (67).

5. Ensemble de rangement (11) selon l'une quelconque des revendications précédentes, **caractérisé en ce que** ladite partie de retenue (25) comprend un passant (81) dans lequel la sangle (21) est montée à coulissement.

6. Ensemble de rangement (11) selon l'une quelconque des revendications précédentes, **caractérisé en ce que** ladite partie de retenue (25) est mobile en rotation par rapport à ladite partie fixe (27) autour d'un axe (111) sensiblement orthogonal à une surface intérieure (49) de l'agencement de cloisonnement (29) lorsque la sangle (21) est fixée sur l'agencement de cloisonnement (29), l'ensemble de rangement (11) comprenant des moyens de blocage (113) de la partie de retenue (25) dans au moins deux positions angulaires distinctes autour de l'axe transversal (111).

7. Ensemble de rangement (11) selon l'une quelconque des revendications précédentes, **caractérisé en ce que** la ou chaque partie de retenue (25) est libérable par rapport à la ou chaque partie fixe (27), l'une de la ou chaque partie de retenue (25) et de la ou chaque partie fixe (27) comprenant une fiche (83), l'autre de la ou chaque partie de retenue (25) et de la ou chaque partie fixe (77) comprenant une fente (87) d'engagement de la fiche (83) s'étendant suivant un axe (C-C') de coulissement de la fiche (83) et retenant la fiche (83) suivant au moins une direction orthogonale à l'axe de coulissement.

8. Ensemble de rangement (11) selon la revendication 7, **caractérisé en ce que** le nombre de parties fixes (27) est supérieur au nombre de parties de retenue (25).

9. Ensemble de rangement (11) selon l'une des revendications 7 ou 8, **caractérisé en ce que** l'agencement (29) comprend au moins deux parois (29), chaque paroi (29) comprenant au moins une partie fixe (27).

10. Véhicule automobile, **caractérisé en ce qu'**il comprend un ensemble (11) selon l'une quelconque des revendications précédentes.

## Claims

1. A motor vehicle stowage assembly (11), consisting in:
- a partitioning arrangement (29) delimiting an inner volume (19) for the stowage of objects, the said partitioning arrangement comprising lateral sides (15) and a floor (17) ;
- a strap (21) for retaining at least one object in the inner volume (19), the said strap (21) having a variable active length and comprising means (65, 67) for adjusting its active length;
- a plurality of releasable attaching means of the strap (21) on the partitioning arrangement (29), **characterized in that** these means comprise at least one fixed portion (27) secured to the lateral sides (15) of the arrangement (29) and at least one portion for retaining the strap (25).

2. Stowage assembly (11) according to Claim 1, **characterized in that** the adjustment means (65, 67) comprise at least one outer coupling surface (65) extending over the strap (21), and at least one outer surface (67) for receiving the coupling surface (65) extending over the strap (21), the coupling surface (65) being attached in a releasable manner to the receiving surface (67) when the said surfaces (65, 67) are in contact.

3. Stowage assembly (11) according to Claim 2, **characterized in that** the adjustment means (65, 67) comprise at least two receiving surfaces (67) situated at a distance from one another.

4. Stowage assembly (11) according to Claim 3, **characterized in that** the adjustment means (65, 67) comprise at least two distinct coupling surfaces (65), the strap (21) having longitudinally an alternation of coupling surfaces (65) and receiving surfaces (67).

5. Stowage assembly (11) according to any one of the preceding claims, **characterized in that** the said retention portion (25) comprises a loop (81) in which the strap (21) is slidingly mounted.

6. Stowage assembly (11) according to any one of the preceding claims, **characterized in that** the said retention portion (25) is able to rotate relative to the said fixed portion (27) about a spindle (111) substantially orthogonal to an inner surface (49) of the partitioning arrangement (29) when the strap (21) is attached to the partitioning arrangement (29), the stowage assembly (11) comprising means (113) for locking the retention portion (25) in at least two distinct angular positions about the transverse spindle (111).

7. Stowage assembly (11) according to any one of the preceding claims, **characterized in that** the or each retention portion (25) can be released relative to the or each fixed portion (27), one of the or each retention portion (25) and of the or each fixed portion (27) comprising an insert (83), the other of the or each retention portion (25) and of the or each fixed portion (77) comprising a slot (87) for engagement of the insert (83) extending on an axis (C-C') for the sliding of the insert (83) and retaining the insert (83) in at least one direction orthogonal to the axis of sliding.

8. Stowage assembly (11) according to Claim 7, **characterized in that** the number of fixed portions (27) is greater than the number of retention portions (25).

9. Stowage assembly (11) according to one of Claims 7 or 8, **characterized in that** the arrangement (29) comprises at least two walls (29), each wall (29) comprising at least one fixed portion (27).

10. Motor vehicle, **characterized in that** it comprises an assembly (11) according to any one of the preceding claims.

## Patentansprüche

1. Staueinheit (11) für ein Kraftfahrzeug, bestehend aus:
- einer Unterteilungseinrichtung (29), die ein Innenvolumen (19) zum Verstauen von Objekten abgrenzt, wobei die Unterteilungseinrichtung seitliche Flanken (15) und einen Boden (17) aufweist;
- einem Gurt (21) zum Halten mindestens eines Objekts in einem Innenvolumen (19), wobei der Gurt (21) eine variable aktive Länge und Mittel (65, 67) zum Einstellen seiner aktiven Länge aufweist;
- mehreren Mitteln zum freigebbaren Befestigen des Gurts (21) auf der Unterteilungseinrichtung (29), **dadurch gekennzeichnet, dass** diese Mittel mindestens einen stationären Teil (27), der fest mit den seitlichen Flanken (15) der Einrichtung (29) verbunden ist, und mindestens einen Rückhalteteil des Gurts (25) aufweisen.

2. Staueinheit (11) nach Anspruch 1, **dadurch gekennzeichnet, dass** die Einstellmittel (65, 67) mindestens eine Außenfläche (65) zum Anhängen aufweisen, die sich auf dem Gurt (21) erstreckt, und mindestens eine Außenfläche (67) zum Aufnehmen der Anhängfläche (65), die sich auf dem Gurt (21) erstreckt, wobei die Anhängfläche (65) freigebbar auf der Aufnahmefläche (67) befestigt ist, während die Flächen (65, 67) in Kontakt sind.

3. Staueinheit (11) nach Anspruch 2, **dadurch gekennzeichnet, dass** die Einstellmittel (65, 67) mindestens zwei Aufnahmeflächen (67) aufweisen, die voneinander beabstandet sind.

4. Staueinheit (11) nach Anspruch 3, **dadurch gekennzeichnet, dass** die Einstellmittel (65, 67) mindestens zwei getrennte Anhängflächen (65) aufweisen, wobei der Gurt (21) längs eine Abwechslung von Anhängflächen (65) und Aufnahmeflächen (67) aufweist.

5. Staueinheit (11) nach einem der vorhergehenden Ansprüche, **dadurch gekennzeichnet, dass** der Rückhalteteil (25) eine Schlaufe (81) aufweist, in der der Gurt (21) gleitend montiert ist.

6. Staueinheit (11) nach einem der vorhergehenden Ansprüche, **dadurch gekennzeichnet, dass** der Rückhalteteil (25) in Drehung in Bezug zu dem stationären Teil (27) um eine Achse (111) beweglich ist, die im Wesentlichen zu einer Innenfläche (49) der Unterteilungseinrichtung (29) orthogonal ist, wenn der Gurt (21) an der Unterteilungsvorrichtung (29) befestigt ist, wobei die Staueinheit (11) Mittel zum Blockieren (113) des Rückhalteteils (25) in mindestens zwei winkelig unterschiedlichen Stellungen um die Querachse (111) aufweist.

7. Staueinheit (11) nach einem der vorhergehenden Ansprüche, **dadurch gekennzeichnet, dass** der oder jeder Rückhalteteil (25) in Bezug zu dem oder jedem stationären Teil (27) freigebbar ist, wobei einer der Rückhalteteile oder jeder Rückhalteteil (25) des stationären Teils oder der stationären Teile (27) einen Stift (83) aufweist, wobei der andere Rückhalteteil oder jeder andere Rückhalteteil (25) und der oder jeder stationäre Teil (77) einen Schlitz (87) zum Einfügen des Stifts (83) aufweisen, der sich entlang einer Gleitachse (C-C') des Stifts (83) erstreckt und den Stift (83) entlang mindestens einer Richtung orthogonal zur der Gleitachse zurückhält.

8. Staueinheit (11) nach Anspruch 7, **dadurch gekennzeichnet, dass** die Anzahl stationärer Teile (27) größer ist als die Anzahl von Rückhalteteilen (25).

9. Staueinheit (11) nach einem der Ansprüche 7 oder 8, **dadurch gekennzeichnet, dass** die Einrichtung (29) mindestens zwei Wände (29) aufweist, wobei jede Wand (29) mindestens einen stationären Teil (27) aufweist.

10. Kraftfahrzeug, **dadurch gekennzeichnet, dass** es eine Einheit (11) nach einem der vorhergehenden Ansprüche aufweist.
